# EUROPEAN PATENT APPLICATION

(11) **EP 3 564 438 A1**
(43) Date of publication of application: **06.11.2019**
(21) Application number: 17886373.4
(22) Date of filing: 26.12.2017
(51) Int. Cl.: D06M 15/53, C08J 5/04, D06M 15/568, D21H 13/10, D21H 13/50

(54) **THERMOPLASTIC RESIN FIBER WITH DISPERSANT ATTACHED**

(30) Priority: 28.12.2016 JP 2016256170
(71) Applicant: Kuraray Co., Ltd., Kurashiki-shi, Okayama 710-0801 (JP)
(72) Inventor: SAKAI, Tomoki, Okayama-shi Okayama 702-8601 (JP); KAWAI, Hiroyuki, Okayama-shi Okayama 702-8601 (JP); HAYAKAWA, Tomohiro, Okayama-shi Okayama 702-8601 (JP); KUSUNOKI, Toshimichi, Okayama-shi Okayama 702-8601 (JP)
(74) Representative: Müller-Boré & Partner Patentanwälte PartG mbB
(86) International application number: PCT/JP2017/046774
(87) International publication number: WO 2018/124130

(57) **Abstract**

To provide a thermoplastic resin fiber to which a dispersant is attached, which can effectively disperse carbon fibers.

A thermoplastic resin fiber to which a dispersant containing a random copolymer (A) of glycidyl ether and an alkylene oxide is attached in an amount of 0.1 to 20% by mass based on a total mass of thermoplastic resin fibers to which a dispersant is not attached.

## Description

### TECHNICAL FIELD

The present invention relates to a thermoplastic resin fiber to which a dispersant is attached. More particularly, the present invention relates to a thermoplastic resin fiber to which a dispersant is attached, that is capable of effectively dispersing carbon fibers. The present invention also relates to a slurry containing the thermoplastic resin fibers, carbon fibers and water, a nonwoven fabric based on the thermoplastic resin fibers and carbon fibers, a carbon fiber-reinforced composite molded body based on the nonwoven fabric, and a method for manufacturing the carbon fiber-reinforced composite molded body.

### BACKGROUND ART

Composite molding materials obtained by impregnating a nonwoven fabric composed of reinforcing fibers such as carbon fibers with a matrix resin are known and used for automobile or aircraft parts and the like.

Such composite molding materials can be manufactured, for example, by laminating a wet nonwoven fabric of carbon fibers and a thermoplastic resin film, and hot press-molding the obtained laminate to melt the thermoplastic resin film and impregnate the carbon fiber nonwoven fabric with the melt.

As another manufacturing method, for example, a method is also known in which carbon fibers and thermoplastic resin fibers are mixed by a papermaking method to form a wet nonwoven fabric, and the thermoplastic resin fibers in the nonwoven fabric are melted by hot-pressing the nonwoven fabric to obtain a molded body. This manufacturing method is preferable from the viewpoint of easily obtaining high mechanical properties of the molded body due to the fact that carbon fibers in the molded body are well dispersed in a matrix resin (molten thermoplastic resin fibers), and from the viewpoint of simplicity of the manufacturing method.

For example, Patent Document 1 discloses a substrate for a fiber-reinforced plastic molded body comprising reinforcing fibers, a matrix resin containing a thermoplastic resin, and a binder component, and a method for manufacturing the substrate for a fiber-reinforced plastic molded body including a step of papermaking by a wet nonwoven fabric method, and discloses that, in the wet nonwoven fabric method, a dispersant in the form of an aqueous solution may be added to water to which carbon fibers are added, in order to improve dispersibility of the carbon fibers as reinforcing fibers.

Further, Patent Document 2 discloses a dispersant for hydrophobic fiber papermaking which comprises (A) a monofatty acid esterified product of ethylene oxide adduct of trimethylolpropane and (B) an anionic surfactant in a specific ratio, a synthetic fiber for papermaking obtained by attaching the dispersant for papermaking to a hydrophobic fiber, and a nonwoven fabric obtained by wet papermaking of the synthetic fibers.

### PRIOR ART DOCUMENTS

### PATENT DOCUMENTS

Patent Document 1: JP-A-2016-20421
Patent Document 2: JP-A-2006-77379

### SUMMARY OF THE INVENTION

### PROBLEMS TO BE SOLVED BY THE INVENTION

When preparing a wet nonwoven fabric from carbon fibers using a papermaking method, it is important to well disperse the carbon fibers in an aqueous dispersion medium. When this dispersion is poor, for example, carbon fibers may be scattered in the form of a block of "bundles" in the molded body, which may be a defect and cause problems such as deterioration in mechanical properties of the molded body.

In Patent Document 1, it has been found by studies of the present inventors that problems may occur, such as dispersing carbon fibers requires time due to the fact that entering a dispersant between bundle-like carbon fibers (CF) requires time, and bending strength, impact resistance or the like may decrease due to the fact that a matrix resin cannot enter between bundle-like CFs generating because of poor dispersion when it is compounded as CFRP (carbon fiber-reinforced plastic).

In addition, Patent Document 2 discloses that, in a method for manufacturing a nonwoven fabric used for filtration bags such as black tea bags, wet tissues or disposable diapers by a wet papermaking method, a dispersant for hydrophobic fiber papermaking is attached to hydrophobic fibers composed of resins such as polyolefin resins or polyester resins in advance to obtain a synthetic fiber for papermaking, and a paper of the obtained synthetic fibers is produced. However, Patent Document 2 does not show a solution for improving the dispersibility of reinforcing fibers such as carbon fibers.

Therefore, an object of the present invention is to provide a thermoplastic resin fiber to which a dispersant is attached, which can effectively disperse carbon fibers.

### SOLUTIONS TO THE PROBLEMS

The present inventors have repeated detailed studies on thermoplastic resin fiber to which a dispersant is attached, in order to solve the above object, thus completing the present invention.

That is, the present invention includes the following preferred aspects.
[1] A thermoplastic resin fiber to which a dispersant containing a random copolymer (A) of glycidyl ether and an alkylene oxide is attached in an amount of 0.1 to 20% by mass based on a total mass of thermoplastic resin fibers to which a dispersant is not attached.
[2] The thermoplastic resin fiber according to the above [1], wherein the random copolymer (A) of glycidyl ether and an alkylene oxide is a random copolymer of phenyl glycidyl ether and an alkylene oxide.
[3] The thermoplastic resin fiber according to the above [2], wherein the random copolymer (A) of phenyl glycidyl ether and an alkylene oxide is a random copolymer of phenyl glycidyl ether and ethylene oxide, or a random copolymer of phenyl glycidyl ether, ethylene oxide and propylene oxide.
[4] The thermoplastic resin fiber according to any one of the above [1] to [3], wherein the dispersant further contains a polyether-based polyurethane resin (B).
[5] The thermoplastic resin fiber according to any one of the above [1] to [4], wherein the thermoplastic resin fiber is one or more fibers selected from the group consisting of polyetherimide fibers, polyamide fibers, polyester fibers, polyolefin fibers, polyetheretherketone fibers and polycarbonate fibers.
[6] The thermoplastic resin fiber according to any one of the above [1] to [5], wherein the thermoplastic resin fiber has one or more structures selected from the group consisting of a circular structure, an elliptical structure, a triangular structure, a cross structure, a core-sheath structure, a sea-island structure, a multi-pleat structure, a hollow structure and a side-by-side structure.
[7] The thermoplastic resin fiber according to any one of the above [1] to [6], wherein the dispersant is attached in an amount of 0.5 to 10% by mass based on the total mass of the thermoplastic resin fibers to which a dispersant is not attached.
[8] Use of the thermoplastic resin fiber according to any one of the above [1] to [7] as a dispersant for carbon fibers in a slurry containing the thermoplastic resin fibers, the carbon fibers and water.
[9] A slurry comprising the thermoplastic resin fibers according to any one of the above [1] to [7], carbon fibers and water.
[10] The slurry according to the above [9], comprising 40 to 900 parts by mass of the thermoplastic resin fibers based on 100 parts by mass of the carbon fibers.
[11] A nonwoven fabric obtained by papermaking and drying the slurry according to the above [9] or [10].
[12] A nonwoven fabric based on the thermoplastic resin fibers according to any one of the above [1] to [7] and carbon fibers, wherein an amount of the dispersant in the nonwoven fabric is 0.01 to 1.0% by mass based on a total mass of thermoplastic resin fibers in the nonwoven fabric.
[13] The nonwoven fabric according to the above [11] or [12], wherein a number of carbon fiber bundles having a fiber bundle width of 0.1 mm or more on a surface is 2000 pieces/m² or less.
[14] A carbon fiber-reinforced composite molded body based on the nonwoven fabric according to any one of the above [11] to [13].
[15] The carbon fiber-reinforced composite molded body according to the above [14], wherein a number of carbon fiber bundles having a fiber bundle width of 0.1 mm or more on a surface is 2000 pieces/m² or less.
[16] The carbon fiber-reinforced composite molded body according to the above [14] or [15], wherein the thermoplastic resin fiber acts as a matrix resin.
[17] A method for manufacturing a carbon fiber-reinforced composite molded body, the method comprising:
   papermaking and drying the slurry according to the above [9] or [10], and
   heat press molding the obtained nonwoven fabric.

### EFFECTS OF THE INVENTION

Carbon fibers can be effectively dispersed by using the thermoplastic resin fiber of the present invention to which a dispersant is attached.

### EMBODIMENTS OF THE INVENTION

The thermoplastic resin fiber of the present invention is a fiber to which a dispersant containing a random copolymer (A) of glycidyl ether and an alkylene oxide is attached.

### <Dispersant>

The dispersant attached to the fiber of the present invention contains a random copolymer (A) of glycidyl ether and an alkylene oxide. The random copolymer (A) is preferably a random copolymer of phenyl glycidyl ether and an alkylene oxide, and is more preferably a random copolymer of phenyl glycidyl ether and ethylene oxide or a random copolymer of phenyl glycidyl ether, ethylene oxide and propylene oxide.

Carbon fibers can be effectively dispersed by attaching the above dispersant to the thermoplastic resin fiber. Therefore, in a slurry containing the thermoplastic resin fibers of the present invention, carbon fibers and water, the carbon fibers are well dispersed in a short time and with weak agitation. That is, the thermoplastic resin fiber of the present invention acts as a dispersant for carbon fibers in the slurry. In addition, a carbon fiber-reinforced composite molded body manufactured from a nonwoven fabric based on the thermoplastic resin fibers of the present invention and carbon fibers has improved mechanical properties due to the well dispersed carbon fibers. In the carbon fiber-reinforced composite molded body, the thermoplastic resin fiber of the present invention acts as a matrix resin. That is, the thermoplastic resin fiber of the present invention is contained as a matrix resin precursor in the slurry and the nonwoven fabric. Here, since the matrix resin (or matrix) means a base material which bonds reinforcing fibers in a composite molded body, a fact that a thermoplastic resin fiber acts as a matrix resin in a carbon fiber-reinforced composite molded body means that the thermoplastic resin fiber forms at least a part of the matrix in the carbon fiber-reinforced composite molded body.

### <Random Copolymer (A)>

The random copolymer (A) is based on glycidyl ether (GE) and an alkylene oxide (AO), and has a structural unit represented by the following chemical formula (1):
[Chemical Formula 1]

-(AO)ₘ-(GE)ₗ- (1)

wherein 1 and m are integers of 1 or more; and GE and AO are arranged with a random order.

The glycidyl ether (GE) is preferably selected from the group consisting of alkyl glycidyl ethers having 1 to 18 alkyl carbon atoms, allyl glycidyl ether, phenyl glycidyl ether and naphthyl glycidyl ether and is more preferably phenyl glycidyl ether, from the viewpoint of easily dispersing carbon fibers.

The alkylene oxide (AO) may be one or more alkylene oxides, and for example, when the alkylene oxide (AO) is two alkylene oxides (AO1) and (AO2), the random copolymer (A) has a structural unit represented by the following chemical formula (2):
[Chemical Formula 2]

-(AO1)ₘ₁-(AO2)ₘ₂-(GE)ₗ- (2)

wherein l, m1 and m2 are integers of 1 or more; and GE, AO1 and AO2 are arranged with a random order.

The alkylene oxide (AO) may be linear or branched, and is preferably a linear or branched alkylene oxide having 1 to 4 carbon atoms, more preferably a linear or branched alkylene oxide having 2 to 3 carbon atoms, and particularly preferably ethylene oxide, or ethylene oxide and propylene oxide, from the viewpoints of reactivity of the alkylene oxide (ease of synthesis of the random copolymer represented by the chemical formula (1)) and ease of availability of the alkylene oxide.

In one aspect, m1 or m2 is preferably an integer of 60 or more, and more preferably an integer of 150 or more.

Copolymerization ratio AO : GE is preferably 70 : 30 to 99.5 : 0.5, more preferably 80 : 20 to 99.5 : 0.5, and particularly preferably 80 : 20 to 99 : 1.

Here, the copolymerization ratio AO : GE is a mass ratio of alkylene oxide to glycidyl ether in the random copolymer (A), which can be measured by use of, for example, nuclear magnetic resonance spectrum (¹H-NMR) under the following measurement conditions.

### <Measurement Conditions>

Equipment: Product Name "JNM-AL400" (manufactured by JEOL Ltd.)
Observed Nucleus: 1 H
Observation Range: 7992.01 Hz
Data Point Number: 32768
Pulse Width: 5.80 µsec
Wait Time: 50.00 µsec
Integration Frequencies: 512
Measurement Temperature: 25°C
Solvent for Measurement: Deuterated chloroform
Sample Concentration: 0.01 g/mL

When the copolymerization ratio in the random copolymer (A) is within the above ranges, carbon fibers are easily dispersed.

A random copolymer of phenyl glycidyl ether (PGE) and ethylene oxide (EO) or a random copolymer of phenyl glycidyl ether, ethylene oxide and propylene oxide (PO), which is a more preferable random copolymer (A), has a structural unit represented by the following chemical formula (3): 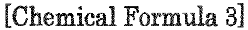 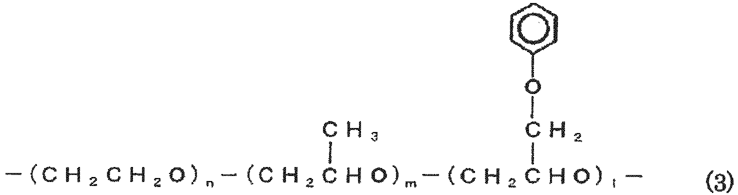 wherein l and n are integers of 1 or more; m is an integer of 0 or more; and PGE, EO and PO are arranged with a random order.

1 is an integer of 1 or more; and m is an integer of 0 or more. n is an integer of 1 or more, preferably 60 or more, and particularly preferably 150 or more.

Copolymerization ratio EO : PGE is preferably 70 : 30 to 99.5 : 0.5, more preferably 80: 20 to 99.5 : 0.5, and particularly preferably 80 : 20 to 99 : 1. In addition, copolymerization ratio of PO is preferably 30 or less, more preferably 20 or less, and particularly preferably 10 or less.

Here, the copolymerization ratio EO : PGE is a mass ratio of ethylene oxide to phenyl glycidyl ether in the random copolymer (A), and the copolymerization ratio of PO is a mass ratio of propylene oxide in the random copolymer (A), which can be measured by use of, for example, nuclear magnetic resonance spectrum (¹H-NMR) under the measurement conditions as described previously.

When the copolymerization ratio in the random copolymer (A) is within the above ranges, carbon fibers are easily dispersed.

The random copolymer (A) preferably has a larger weight-average molecular weight M_{w} from the viewpoint of dispersibility of the carbon fibers, for example, preferably 4,000 to 10,000,000, more preferably 4,000 to 1,000,000, and particularly preferably 10,000 to 200,000.

The weight-average molecular weight M_{w} can be measured by use of, for example, gel permeation chromatography (GPC) under the following measurement conditions.

### <Measurement Conditions>

Apparatus: Product Name "LC-10AD" (manufactured by Shimadzu Corporation)
Detector: Differential Refractive Index Detector (RID)
Column: Product Name "SHODEX KF-804" (manufactured by SHOWA DENKO K.K.)
Measurement Temperature: 30°C
Eluent: THF
Flow Rate: 1.0 mL/min
Sample Concentration: 0.2% by mass (THF)
Sample Injection Volume: 100 pL
Conversion Standard: Polyethylene oxide

When the weight-average molecular weight of the random copolymer (A) is within the above ranges, carbon fibers are easily dispersed.

The molecular weight distribution (weight-average molecular weight M_{w}/number-average molecular weight Mₙ) of the random copolymer (A) is not particularly limited, but is preferably 5 or less, more preferably 3 or less, and particularly preferably 2 or less. In the same manner as the measurement of the weight-average molecular weight M_{w} described above, the number-average molecular weight Mₙ can be measured by use of, for example, gel permeation chromatography (GPC). When the molecular weight distribution of the random copolymer (A) is within the above ranges, for example in a case where the random copolymer (A) is used as an aqueous solution, the aqueous solution easily has a viscosity that is easy to handle and carbon fibers are easily dispersed.

The degree of randomness of the random copolymer (A) is not particularly limited.

### <Production of Random Copolymer (A)>

The random copolymer (A) can be produced by copolymerizing glycidyl ether and an alkylene oxide, preferably in the above-described copolymerization ratio.

Copolymerization of glycidyl ether and an alkylene oxide can be carried out by use of a publicly known method such as a solution polymerization method or a solvent slurry polymerization method. For example, it can be carried out by adding predetermined amounts of glycidyl ether and an alkylene oxide to a solution obtained by adding an appropriate catalyst to an appropriate solvent at room temperature under an inert gas atmosphere. A general catalyst used for producing a random copolymer from glycidyl ether and an alkylene oxide can be used as an appropriate catalyst, and examples thereof include organoaluminum catalysts, organozinc catalysts, organotin phosphate condensate catalysts, alkali metal hydroxide catalysts such as potassium hydroxide and sodium methoxide, alkoxides of alkali metals, and catalyst compositions obtained by combining them. Among them, it is preferred to use a catalyst composition containing an organoaluminum catalyst, and an alkoxide of an alkali metal or an alkali metal hydroxide, from the viewpoints of catalytic activity level, ease of adjusting polymerization degree, and ease of handling. A general solvent used for producing a random copolymer from glycidyl ether and an alkylene oxide can be used as an appropriate solvent, and examples thereof include ethers, aliphatic hydrocarbons, aromatic hydrocarbons, halogen solvents, ketones and the like, and mixtures of two or more of these solvents. Among them, it is preferred to use n-butane, isobutane, n-pentane, cyclopentane, industrial hexane, n-hexane, isohexane, cyclohexane, n-heptane, n-octane or isooctane from the viewpoint that the random copolymer produced is easily dried and can be handled as powders without any aggregation because it is not dissolved in a solvent. In addition, it is preferred to use toluene or xylene from the viewpoint that the random copolymer produced can be handled as a solution because it is dissolved in the solvent. The reaction temperature (copolymerization temperature) at which the copolymerization is carried out is not particularly limited as long as it is a general temperature, and may be, for example, 150°C or less, and preferably 50°C or less. After the copolymerization reaction, the reaction solution is filtered or concentrated, and the residue is dried by a general method (for example, by use of a vacuum dryer), so that a random copolymer (A) of glycidyl ether and an alkylene oxide can be obtained as a viscous liquid or a solid.

A commercially available phenylglycidyl ether-ethylene oxide-propylene oxide random copolymer can also be used as the random copolymer (A), and examples thereof can include ALKOX (registered trade name) CP-B1, CP-B2 and the like manufactured by Meisei Chemical Works, Ltd.

The dispersant attached to the thermoplastic resin fiber of the present invention preferably further contains a polyether-based polyurethane resin (B) in addition to the random copolymer (A).

### <Polyether-Based Polyurethane Resin (B)>

A polyether-based polyurethane resin (B) is preferably based on a bifunctional polyol which is polyethylene glycol and/or an ethylene oxide-propylene oxide random copolymer, and hexamethylene diisocyanate.

The polymerization ratio (bifunctional polyol : hexamethylene diisocyanate) is preferably 99.5 : 0.5 to 60 : 40, more preferably 99.5 : 0.5 to 80 : 20, and particularly preferably 99 : 1 to 95 : 5. Here, the polymerization ratio (bifunctional polyol : hexamethylene diisocyanate) is a mass ratio of the bifunctional polyol to the hexamethylene diisocyanate in the polyether-based polyurethane resin (B), which can be measured by use of, for example, nuclear magnetic resonance spectrum (¹H-NMR) as described previously. When the polymerization ratio in the polyether-based polyurethane resin (B) is within the above ranges, water solubility of the polyether-based polyurethane resin (B) is improved, and wettability to the carbon fibers is improved, so that carbon fibers can be easily dispersed.

The polyether-based polyurethane resin (B) has a weight-average molecular weight M_{w} of preferably 5,000 to 1,000,000, more preferably 10,000 to 1,000,000, and particularly preferably 20,000 to 100,000. The weight-average molecular weight M_{w} can be measured by use of, for example, gel permeation chromatography (GPC) as described previously. When the weight-average molecular weight of the polyether-based polyurethane resin (B) is within the above ranges, carbon fibers can be easily dispersed.

The molecular weight distribution (M_{w}/Mₙ) of the polyether-based polyurethane resin (B) is not particularly limited.

### <Production of Polyether-Based Polyurethane Resin (B)>

The polyether-based polyurethane resin (B) can be produced by polymerizing a bifunctional polyol which is polyethylene glycol and/or an ethylene oxide-propylene oxide random copolymer with hexamethylene diisocyanate preferably in the above-described polymerization ratio.

### <Polyethylene Glycol>

Polyethylene glycol which is one of the bifunctional polyols for producing the polyether-based polyurethane resin (B) preferably has a weight-average molecular weight M_{w} of 200 to 300,000, more preferably 400 to 200,000, and particularly preferably 400 to 20,000. The weight-average molecular weight M_{w} can be measured by use of, for example, gel permeation chromatography (GPC) as described previously. When the weight-average molecular weight of polyethylene glycol is within the above ranges, water solubility of the polyether-based polyurethane resin (B) is improved, and wettability to the carbon fibers is improved, so that carbon fibers can be easily dispersed.

The molecular weight distribution (M_{w}/Mₙ) of the polyethylene glycol is not particularly limited.

Such polyethylene glycols are commercially available, for example, under the trade name of "PEG series" from Sanyo Chemical Industries, Ltd. or under the trade name of "ALKOX Series" from Meisei Chemical Works, Ltd.

### <Ethylene Oxide-Propylene Oxide Random Copolymer>

An ethylene oxide-propylene oxide random copolymer which is one of the bifunctional polyols for producing the polyether-based polyurethane resin (B) is based on ethylene oxide (EO) and propylene oxide (PO).

Copolymerization ratio EO : PO is preferably 90 : 10 to 10 : 90. Here, the copolymerization ratio EO : PO is a mass ratio of ethylene oxide to propylene oxide in the ethylene oxide-propylene oxide random copolymer, which can be measured by use of, for example, nuclear magnetic resonance spectrum (¹H-NMR) as described previously. When the copolymerization ratio in the ethylene oxide-propylene oxide random copolymer is within the above range, carbon fibers are easily dispersed.

The ethylene oxide-propylene oxide random copolymer preferably has a weight-average molecular weight M_{w} of 200 to 150,000, more preferably 400 to 110,000, and particularly preferably 400 to 20,000. The weight-average molecular weight M_{w} can be measured by use of, for example, gel permeation chromatography (GPC) as described previously. When the weight-average molecular weight of the ethylene oxide-propylene oxide random copolymer is within the above ranges, carbon fibers are easily dispersed.

The molecular weight distribution (M_{w}/Mₙ) of the ethylene oxide-propylene oxide random copolymer is not particularly limited.

The degree of randomness of the ethylene oxide-propylene oxide random copolymer is not particularly limited.

The ethylene oxide-propylene oxide random copolymer can be produced by copolymerizing ethylene oxide and propylene oxide preferably in the above-described copolymerization ratio. The copolymerization of ethylene oxide and propylene oxide can be carried out by use of a publicly known method disclosed in JP-A-H7-243178, JP-A-2011-32398 or the like. For example, it can be carried out by addition-polymerizing ethylene oxide and propylene oxide to a diol compound. Ethylene glycol, propylene glycol, butane diol, hexamethylene glycol, hexylene glycol and the like can be used as the diol compound. A general catalyst used for producing a random copolymer from ethylene oxide and propylene oxide can be used as an appropriate catalyst, and examples thereof include hydroxides of alkali metals, alcoholates of alkali metals, and the like. Among them, it is preferred to use sodium hydroxide and potassium hydroxide from the viewpoint of ease of handling. The amount of the catalyst used is usually 0.01 to 1% by mass, preferably 0.05 to 0.5% by mass, and more preferably 0.1 to 0.3% by mass, based on the ethylene oxide-propylene oxide random copolymer. A general solvent used for producing a random copolymer from ethylene oxide and propylene oxide can be used as an appropriate solvent, and examples thereof include BTX such as toluene and xylene. However, solvent-free synthesis is preferred from the viewpoint of production cost. The reaction temperature (copolymerization temperature) at which the copolymerization is carried out is not particularly limited as long as it is a general temperature, and may be, for example, 80 to 200°C. After the copolymerization reaction, unreacted monomers and a solvent are removed, and, if necessary, the catalyst is removed by a method such as adsorptive filtration, so that an ethylene oxide-propylene oxide random copolymer can be obtained as a liquid or a solid.

A commercially available ethylene oxide-propylene oxide random copolymer can also be used as the ethylene oxide-propylene oxide random copolymer. Examples thereof can include "New Pole (registered trade name) 75H-90000" manufactured by Sanyo Chemical Industries, Ltd., "Brownon P-13075R" manufactured by AOKI OIL INDUSTRIAL Co., Ltd., and the like.

The polymerization of a bifunctional polyol and hexamethylene diisocyanate for producing a polyether-based polyurethane resin (B) can be carried out by use of a publicly known method disclosed in JP-A-H10-147706, JP-A-2001-354742, JP-A-H7-243178 or the like. For example, the polymerization can be carried by heating and dehydrating a bifunctional polyol under an inert gas atmosphere, and dissolving it in an appropriate solvent after cooling, followed by adding hexamethylene diisocyanate and an appropriate catalyst thereto to polymerize the mixture. A general catalyst used for producing a polyether-based polyurethane resin can be used as an appropriate catalyst. Examples thereof include amine-based catalysts (triethylamine, dimethylcyclohexylamine, tetramethylethylenediamine, pentamethyldiethylenetriamine, triethylenediamine, N-methylmorpholine and the like), tin-based catalysts (dibutyltin dilaurate, trimethyltin laurate, trimethyltin hydroxide, dimethyltin dilaurate and the like), lead-based catalysts (lead oleate, lead 2-ethylhexanoate, lead naphthenate, lead octylate and the like), and the like. Among them, it is preferred to use dibutyltin dilaurate from the viewpoint of high catalytic activity. The amount of the catalyst used is usually 0.01 to 5 parts by mass, preferably 0.05 to 3 parts by mass, and more preferably 0.1 to 1 part by mass, based on 100 parts by mass of the polyether-based polyurethane resin. A general solvent used for producing a polyether-based polyurethane resin can be used as an appropriate solvent, and examples thereof include acetone, toluene, xylene, ethyl acetate, methyl ethyl ketone, methyl isobutyl ketone, and the like. Among them, it is preferred to use acetone from the viewpoint of ease of removing the solvent. The reaction temperature (polymerization temperature) at which the polymerization is carried out is not particularly limited as long as it is a general temperature, and may be, for example, 20 to 150°C, and preferably 20 to 80°C. After the polymerization reaction, the solvent is removed by a general method (e.g., distilled off), and replaced by water, so that an aqueous solution of the polyether-based polyurethane resin (B) can be obtained.

A commercially available polyether-based polyurethane resin can also be used as the polyether-based polyurethane resin (B), and examples thereof can include Pulset HA manufactured by Meisei Chemical Works, Ltd., and the like.

### <Thermoplastic Resin Fibers>

The thermoplastic resin fiber in the present invention is not particularly limited as long as it is a thermoplastic resin fiber generally used as a thermoplastic resin fiber which is a matrix resin precursor of a carbon fiber-reinforced composite molded body. Such thermoplastic resin fibers are preferably one or more fibers selected from the group consisting of polyetherimide fibers, polyamide fibers, polyester fibers, polyolefin fibers, polyetheretherketone fibers and polycarbonate fibers, more preferably one or more fibers selected from the group consisting of polyetherimide fibers, polyamide fibers, polypropylene fibers and polyetheretherketone fibers from the viewpoints of adhesion to carbon fibers and a melting point suitable for molding, and particularly preferably one or more fibers selected from the group consisting of polyetherimide fibers, polyamide fibers and polypropylene fibers from the viewpoint of physical properties such as tensile strength.

The structure of the thermoplastic resin fiber in the present invention is not particularly limited as long as it is a normal structure of the thermoplastic resin fiber which is a matrix resin precursor of the carbon fiber-reinforced composite molded body. Such structure is preferably one or more structures selected from the group consisting of a circular structure, an elliptical structure, a triangular structure, a cross structure, a core-sheath structure, a sea-island structure, a multi-pleat structure, a hollow structure and a side-by-side structure.

The thermoplastic resin fiber in the present invention may contain an antioxidant, an antistatic agent, a radical inhibitor, a matting agent, an ultraviolet absorber, a flame retardant, various inorganic substances and the like as long as the effect of the present invention is not impaired. Specific examples of such inorganic substances include carbon materials such as carbon nanotubes, fullerenes, carbon black, graphite and silicon carbide; silicate materials such as talc, warastenite, zeolite, sericite, mica, kaolin, clay, pyrophyllite, silica, bentonite and alumina silicate; metal oxides such as ceramic beads, silicon oxide, magnesium oxide, alumina, zirconium oxide, titanium oxide and iron oxide; carbonates such as calcium carbonate, magnesium carbonate and dolomite; sulfates such as calcium sulfate and barium sulfate; hydroxides such as calcium hydroxide, magnesium hydroxide and aluminum hydroxide; glasses such as glass beads, glass flakes and glass powder; ceramic beads; boron nitride, and the like.

A single yarn fineness of the thermoplastic resin fiber in the present invention is not particularly limited, and is selected, for example, from the range of 0.1 to 50 dtex. In order to obtain a carbon fiber-reinforced composite molded body having excellent mechanical properties, it is desirable to uniformly disperse carbon fibers in a nonwoven fabric to be a precursor by thermoplastic resin fibers, so that the single yarn fineness is preferably 0.1 to 40 dtex, more preferably 0.1 to 15 dtex, more preferably 0.1 to 10 dtex, more preferably 0.2 to 9 dtex, and particularly preferably 0.3 to 8 dtex (for example, 0.3 to 5 dtex). When the single yarn fineness is within the above ranges, carbon fibers are easily dispersed uniformly by thermoplastic resin fibers, and good freeness is easily obtained in a process in a case where a nonwoven fabric is produced by a wet papermaking method.

The average fiber length of monofilaments of the thermoplastic resin fiber in the present invention is usually 0.5 to 60 mm, preferably 1 to 55 mm, and more preferably 3 to 50 mm. When the average fiber length is within the above ranges, the fibers are less easily to fall off during the process of manufacturing the nonwoven fabric, good freeness is easily obtained in a process in a case where a nonwoven fabric is produced by wet papermaking, and carbon fibers are easily dispersed uniformly by thermoplastic resin fibers.

### <Method for Manufacturing Thermoplastic Resin Fiber>

The method for manufacturing a thermoplastic resin fiber in the present invention is not particularly limited as long as fiber shape can be obtained, and can be carried out using a publicly known melt spinning apparatus. That is, a thermoplastic resin fiber can be manufactured by melt-kneading at least a pellet and a powder of a thermoplastic polymer by a melt extruder, introducing the molten polymer into a spinning cylinder, weighing it by a gear pump, and winding yarn discharged from a spinning nozzle. The take-up speed at that time is not particularly limited, but it is preferable to take it out in the range of 500 m/min to 4000 m/min from the viewpoint of reducing occurrence of molecular orientation on the spinning wire.

### <Method for Attaching Dispersant to Thermoplastic Resin Fiber>

A method for attaching a dispersant to a thermoplastic resin fiber is not particularly limited.

For example, a dispersant can be attached to a thermoplastic resin fiber by (i) a method of attaching an aqueous solution of a random copolymer (A) or an aqueous solution of a random copolymer (A) and a polyether-based polyurethane resin (B) to chopped fibers of thermoplastic resin fibers cut to an appropriate length, by a publicly known method such as an immersion method and a spraying method, and drying it, (ii) a method of attaching an aqueous solution of a random copolymer (A) and an aqueous solution of a polyether-based polyurethane resin (B) to chopped fibers of thermoplastic resin fibers cut to an appropriate length, sequentially in any order, by a publicly known method such as an immersion method and a spraying method, and drying it, (iii) a method of attaching an aqueous solution of a random copolymer (A) or an aqueous solution of a random copolymer (A) and a polyether-based polyurethane resin (B) to thermoplastic resin fibers in any step such as spinning and drawing, by a publicly known method such as an oil feed roller method, an immersion method and a spraying method, and drying it, (iv) a method of attaching an aqueous solution of a random copolymer (A) and an aqueous solution of a polyether-based polyurethane resin (B) to thermoplastic resin fibers in any step such as spinning and drawing, sequentially in any order, by a publicly known method such as an oil feed roller method, an immersion method and a spraying method, and drying it, or the like. The thermoplastic resin fiber to which a dispersant is attached by the above method (iii) or (iv) may be cut to an appropriate length.

The concentration of the aqueous solution is usually 0.1 to 5% by mass, and preferably 0.5 to 3% by mass from the viewpoint of easily securing a predetermined adhesion amount.

In the thermoplastic resin fibers of the present invention, a dispersant is attached in an amount of preferably 0.1 to 20% by mass, more preferably 0.2 to 15% by mass, still further preferably 0.5 to 10% by mass, and particularly preferably 1 to 7% by mass, based on the total mass of the thermoplastic resin fibers to which a dispersant is not attached. The adhesion amount of a dispersant can be measured, for example, using a Soxhlet extraction method, as described in the following examples. It is easy to disperse carbon fibers when the adhesion amount of a dispersant is within the above ranges.

### <Slurry>

The present invention also relates to a slurry containing the thermoplastic resin fibers of the present invention, carbon fibers and water.

### <Carbon Fibers>

The carbon fibers are not particularly limited, and any of the known carbon fibers can be used. Examples thereof include polyacrylonitrile-based (PAN-based) carbon fibers, rayon-based carbon fibers, pitch-based carbon fibers, and the like. The carbon fibers may be each used alone or in mixture of two or more kinds thereof. It is preferred to use PAN-based carbon fibers from the viewpoints of inexpensive cost and good mechanical properties. Such carbon fibers are available as commercial products.

The carbon fibers preferably have a diameter of 3 to 15 pm, and more preferably 5 to 10 µm.

Carbon fibers which are recycled from carbon fiber-reinforced plastics (CFRP) or used carbon fiber nonwoven fabrics may be used as the carbon fibers. These carbon fibers may be also each used alone or in mixture of two or more kinds thereof. Since recycled carbon fibers are relatively inexpensive, they are preferred from a cost perspective. The method for recycling carbon fibers is not particularly limited, and examples thereof include a method of removing a resin part from the CFRP by combustion, a method of removing a resin part by dissolving or decomposing it with a solvent, and the like. In the recycling of carbon fibers, it is difficult to obtain staples having a uniform fiber length, and very short fibers are mixed therein. In the present invention, very short fibers may be mixed in recycled carbon fibers in this manner to such an extent that the effect of the present invention is not impaired.

The carbon fibers usually have a length of 5 to 100 mm. In the present invention, the carbon fibers may be cut so that they have a length of for example 12.5 mm or more, particular 10.0 mm to 100.0 mm, and furthermore 12.5 mm to 50.0 mm, and then can be used.

General treatment for modifying a surface state of carbon fibers may be either performed or not performed on the carbon fibers. Examples of such a treatment include application of an oil agent composition, introduction of a hydrophilic functional group by oxidation treatment, removal of an irregular surface fragile layer by application of high voltage, and the like. From the viewpoint that the thermoplastic resin fiber of the present invention easily acts as a dispersant for carbon fibers, non-surface treated carbon fibers are preferred.

The slurry of the present invention can be manufactured, for example, by putting the thermoplastic resin fibers of the present invention, carbon fibers and water into a general mixer or the like, and stirring (disintegrating) them. The order of putting the thermoplastic resin fibers of the present invention, carbon fibers and water is not particularly limited. Examples of the mixer and the like can include various disintegrators (pulpers), various beaters such as Niagara beaters, various refiners such as single disc refiners and double disc refiners, various mixers, and the like.

Not only usual tap water but also water such as distilled water and purified water can be used as the water of an aqueous dispersion medium. In addition, the aqueous dispersion medium may contain an aromatic hydrocarbon-based solvent, a hydrocarbon-based solvent, a halogenated hydrocarbon-based solvent, an ether-based solvent, a ketone-based solvent, an ester-based solvent, a glycol ether-based solvent, an acetate-based solvent, a dialkyl ether-based solvent, an alcohol-based solvent, a glycol-based solvent, a nitrile-based solvent, a carbonate-based solvent, or the like. The above solvents may be contained alone or in combination of two or more thereof.

The slurry of the present invention contains preferably 40 to 900 parts by mass, more preferably 60 to 500 parts by mass, and particularly preferably 80 to 300 parts by mass of the thermoplastic resin fibers of the present invention, based on 100 parts by mass of carbon fibers. When the ratio of the thermoplastic resin fibers to the carbon fibers is within the above ranges, the carbon fibers are easily well dispersed in the aqueous dispersion medium in a short time and with weak agitation and high mechanical properties are easily obtained as to the carbon fiber-reinforced composite molded body manufactured from the slurry.

The slurry of the present invention contains preferably 0.001 to 1% by mass of the thermoplastic resin fibers of the present invention, 0.001 to 1% by mass of carbon fibers and 98 to 99.998% by mass of water, more preferably 0.005 to 0.5% by mass of the thermoplastic resin fibers of the invention, 0.005 to 0.5% by mass of carbon fibers and 99 to 99.99% by mass of water, and particularly preferably 0.01 to 0.3% by mass of the thermoplastic resin fibers of the invention, 0.01 to 0.3% by mass carbon fibers and 99.4 to 99.98% by mass of water, such that their total is 100% by mass, based on the total mass of the slurry. When the amount of each component is within the above ranges, carbon fibers are easily well dispersed in the aqueous dispersion medium in a short time and with weak agitation, and high mechanical properties are easily obtained as to the carbon fiber-reinforced composite molded body manufactured from the slurry.

### <Inferred Action Mechanism>

Although the action mechanism of the thermoplastic resin fiber of the present invention to which a dispersant is attached is unknown, the following action mechanism is inferred.

While carbon fibers have poor dispersibility in an aqueous dispersion medium due to intermolecular force, adhesion effect of sizing agent or the like, the dispersibility can be improved by using a dispersant compatible with the carbon fibers. When mixing carbon fibers and thermoplastic resin fibers to which a dispersant are not attached with an aqueous solution of a dispersant in an aqueous dispersion medium, it takes time to disperse the thermoplastic resin fibers and to disperse the carbon fibers. Thus, in the present invention, it is inferred that the thermoplastic resin fibers can be rapidly dispersed in the aqueous dispersion medium by attaching a specific dispersant to the thermoplastic resin fibers and can enter between the carbon fibers, thereby generating an effect of quickly dispersing the carbon fibers. Then, a highly aggregated carbon fiber bundle does not exist in a wet nonwoven fabric whose dispersibility is improved by using the thermoplastic resin fibers of the present invention. Therefore, it is inferred that the thermoplastic resin fibers completely penetrate the carbon fibers when heat press molding the wet nonwoven fabric, and mechanical properties of the resulting carbon fiber-reinforced composite molded body are greatly improved. However, with regard to the reason (action mechanism) in which the thermoplastic resin fiber of the present invention is excellent in the above effect, it is clearly stated here that it is within the scope of the present invention even if it is different from the above reason.

### <Nonwoven Fabric>

The present invention also relates to a nonwoven fabric based on the thermoplastic resin fibers of the present invention and carbon fibers, in which the amount of the dispersant in the nonwoven fabric is preferably 0.01 to 1.0% by mass, more preferably 0.03 to 0.5% by mass, and particularly preferably 0.05 to 0.3% by mass, based on the total mass of thermoplastic resin fibers in the nonwoven fabric. The amount of dispersant in the nonwoven fabric can be measured, for example, using the Soxhlet extraction method, as described in the following examples.

The number of carbon fiber bundles having a fiber bundle width of 0.1 mm or more on a surface of the nonwoven fabric of the present invention is preferably 2000 pieces/m² or less, more preferably 1100 pieces/m² or less, more preferably 500 pieces/m² or less, and particularly preferably 250 pieces/m² or less. The number of carbon fiber bundles can be determined, for example, by counting the number of carbon fiber bundles on the surface of the nonwoven fabric cut into an appropriate dimension (for example, 25 cm x 25 cm) using a colony counter pen and calculating the number of carbon fiber bundles per 1 m² of the nonwoven fabric from the obtained numerical value. The fact that the number of carbon fiber bundles is equal to or less than the above numerical values indicates that the carbon fibers are very uniformly dispersed in an aqueous medium by the thermoplastic resin fibers of the present invention.

Here, the "fiber bundle width" will be described. As described previously, since carbon fibers have poor dispersibility in the aqueous dispersion medium due to intermolecular force or the like, the carbon fibers tend to align and aggregate in a fiber axial direction, and as a result, carbon fiber bundles of a plurality of carbon fibers are formed in the aqueous dispersion medium. Such carbon fiber bundles are formed, for example, in a slurry containing thermoplastic resin fibers, carbon fibers and water, and remain in the nonwoven fabric manufactured from the slurry. In the present invention, the "fiber bundle width" means a length of the carbon fiber bundle remaining in the nonwoven fabric in a direction perpendicular to the fiber axial direction.

### <Method for Manufacturing Nonwoven Fabric>

The nonwoven fabric of the present invention can be manufactured by papermaking and drying the slurry.

Specifically, first, a so-called wet papermaking method is performed in which the aqueous dispersion medium is removed from the slurry to form a sheet. As a paper machine used for a wet papermaking method, for example, a known paper machine such as an inclined wire type paper machine, a cylinder paper machine, a fourdrinier paper machine or a tanmo paper machine can be used.

In the subsequent drying, drying is performed using a cylinder dryer, an air dryer or the like.

Subsequently, the thickness can be adjusted to an appropriate thickness by subjecting to thermal pressing processing such as calendar roll treatment under heating.

The basis weight of the nonwoven fabric is preferably 20 to 150 g/m², and more preferably 40 to 100 g/m². When the basis weight is within the above ranges, deterioration in operability of the paper machine, such as cutting of the nonwoven fabric, is easily avoided, and, since the nonwoven fabric can be dried within an appropriate time, deterioration in productivity is easily avoided.

In the present invention, the papermaking speed of the nonwoven fabric is preferably 10 m/min or more. The upper limit of the take-up speed is usually 100 m/min or less. The drying temperature of the nonwoven fabric by a cylinder dryer or the like is usually 100 to 200°C, and preferably 100 to 150°C.

### <Carbon Fiber-Reinforced Composite Molded Body>

The present invention also relates to a carbon fiber-reinforced composite molded body based on the nonwoven fabric of the present invention.

The number of carbon fiber bundles having a fiber bundle width of 0.1 mm or more on a surface of the carbon fiber-reinforced composite molded body of the present invention is preferably 2000 pieces/m² or less, more preferably 1100 pieces/m² or less, more preferably 500 pieces/m² or less, and particularly preferably 250 pieces/m² or less. The method for determining the number of carbon fiber bundles is as described previously. The fact that the number of carbon fiber bundles is equal to or less than the above numerical values indicates that the carbon fibers are very uniformly dispersed in an aqueous medium by the thermoplastic resin fibers of the present invention.

### <Method for Manufacturing Carbon Fiber-Reinforced Composite Molded Body>

The carbon fiber-reinforced composite molded body of the present invention can be manufactured by heat press molding the nonwoven fabric.

Accordingly, the present invention also relates to a method for manufacturing a carbon fiber-reinforced composite molded body, which comprises papermaking and drying the slurry of the present invention, and heat press molding the obtained nonwoven fabric.

By heat press molding the nonwoven fabric, the thermoplastic resin fibers contained in the nonwoven fabric are at least partially melted to lose at least a part of the fiber shape, and act as a matrix resin that bonds a reinforced material (carbon fiber) in the obtained carbon fiber-reinforced composite molded body. That is, the thermoplastic resin fibers form at least a part of the matrix that bonds the carbon fibers in the carbon fiber-reinforced composite molded body.

In the method for manufacturing a carbon fiber-reinforced composite molded body of the present invention, the nonwoven fabric may be used alone or by stacking a number of sheets. In the case of stacking a number of sheets, a number of a single type of nonwoven fabric may be used, or different types of nonwoven fabrics may be used in combination.

There is no particular limitation on the method of heat press molding, and general compression molding such as stampable molding, press molding, vacuum compression molding or GMT molding is preferably used. A molding temperature at that time may be appropriately set according to a flow start temperature and a decomposition temperature of the thermoplastic resin fiber to be used. For example, when the thermoplastic resin fiber is crystalline, the molding temperature is preferably in the range of the melting point of the thermoplastic resin fiber or more and (the melting point +100)°C or less. When the thermoplastic resin fiber is non-crystalline, the molding temperature is preferably in the range of the glass transition temperature of the thermoplastic resin fiber or more and (the glass transition temperature +200)°C or less. If necessary, the nonwoven fabric can also be preheated using an IR heater or the like before heat molding.

The pressure at the time of heat press molding is also not particularly limited, but it is usually performed at a pressure of 0.05 MPa or more, for example, 0.05 to 15 MPa. The time for heat press molding is also not particularly limited, but a polymer may be deteriorated if exposed to a high temperature for a long time, so it is usually preferably within 30 minutes. In addition, the thickness and density of the obtained carbon fiber-reinforced composite molded body can be appropriately set depending on the ratio of carbon fibers in the nonwoven fabric and the pressure applied. Furthermore, the shape of the resulting carbon fiber-reinforced composite molded body is not also particularly limited, and can be appropriately set. Depending on the purpose, it is also possible to carry out heat molding by laminating a plurality of nonwoven fabrics having different specifications or separately arranging nonwoven fabrics having different specifications in a mold of a certain size. In some cases, it can be molded in combination with other reinforcing fiber fabrics or resin composites. Moreover, depending on the purpose, it is also possible to again heat press mold the carbon fiber-reinforced composite molded body obtained by heat press molding once.

The obtained carbon fiber-reinforced composite molded body is obtained by papermaking and drying a slurry containing the thermoplastic resin fibers of the present invention and carbon fibers, and heat press molding the obtained nonwoven fabric. Therefore, carbon fibers having a long fiber length can be contained at a high content and carbon fibers arranged in a very uniform and random manner can be contained, so that mechanical properties and the isotropy thereof are excellent. In addition, excellent shaping property is also achieved by heat press molding the nonwoven fabric.

### EXAMPLES

The present invention will further be specifically described by giving examples and comparative examples, but the present invention is not limited to these examples.

### <Measurement Method and Evaluation Method>

Various measurement methods and evaluation methods in examples and comparative examples are as follows.

### <Amount of Dispersant Attached to Thermoplastic Resin Fiber or Nonwoven Fabric>

A Soxhlet extractor (manufactured by As One Corporation) was filled with 1.5 g of thermoplastic resin fibers or 3.0 g of a nonwoven fabric, and extraction treatment was performed using 150 mL of acetone for 10 hours. The amount of a dispersant in this extract was quantitatively analyzed by high performance liquid chromatography to determine the amount of dispersant. In the determination, a calibration curve prepared using a standard of each dispersant was used.

### <Number of Carbon Fiber Bundles Having Fiber Bundle Width of 1 mm or More per 1 m² of Nonwoven Fabric or Carbon Fiber-Reinforced Composite Molded Body>

The number of carbon fiber bundles having a fiber bundle width of 1 mm or more was counted, using a colony counter pen Lite (manufactured by Iuchi Seieido Co ., Ltd.), on a surface of a sample prepared by cutting a nonwoven fabric or a carbon fiber-reinforced composite molded body into 25 cm × 25 cm. From the obtained numerical values, the number of carbon fiber bundles per 1 m² of nonwoven fabric or carbon fiber-reinforced composite molded body was calculated.

### <Dispersibility of Carbon Fibers in Slurry>

Dispersibility of the carbon fibers in the slurry after stirring for a predetermined time was visually evaluated.
It was evaluated by 3 grades:
A (uniform) in which a carbon fiber bundle was not observed;
B (slightly non-uniform) in which the carbon fibers are not sufficiently dispersed and a carbon fiber bundle was observed; and
C (non-uniform) in which the carbon fibers are not dispersed and carbon fiber bundles are significantly observed.

### <Bending Strength Test>

- Testing machine: INSTRON 5566 (manufactured by Instron Japan Co., Ltd.)
- Test method: Three-point bending test
- Testing speed: 2 mm/min
- Distance between support points: 40 times the thickness of test piece
- Test piece size: 10 mm × 100 mm

Under the above conditions, the maximum bending stress (MPa) of the carbon fiber-reinforced composite molded body was measured.

### <Charpy Impact Test>

- Testing machine: Charpy impact tester DG-CB (manufactured by Toyo Seiki Seisaku-sho, Ltd.)
- Test piece size: 10 mm × 100 mm
- Impact test method: Flatwise

Under the above conditions, the Charpy impact value (KJ/m²) of the carbon fiber-reinforced composite molded body was measured.

### <Example 1>

### <Manufacture of Thermoplastic Resin Fibers of Present Invention>

Into a slash pulper (model: SVP-250-B, manufactured by Kyowa Iron Works Inc.) was introduced 2.5 kg of chopped fibers of polyetherimide (circular structure) with a single yarn fineness of 2.2 dtex cut into 5 mm of fiber length, 5 L of an aqueous solution of a random copolymer (A) prepared to 2.5% by mass was added thereto, the mixture was stirred at 200 rpm for 10 minutes, 0.1 kg of a polyether-based polyurethane resin (B) was added to the obtained mixture, and the mixture was further stirred at 200 rpm for 10 minutes. Thereafter, a dispersant was attached to a surface of the polyetherimide fibers by drying at 105°C for 10 hours using a hot air dryer. The amount of dispersants (A) and (B) attached to the polyetherimide fibers was 6.7% by mass based on the total weight of the polyetherimide fibers to which a dispersant was not attached.

As the random copolymer (A), a random copolymer of phenyl glycidyl ether (PGE), ethylene oxide (EO) and propylene oxide (PO) ("ALKOX CP-B1" manufactured by Meisei Chemical Works, Ltd., copolymerization ratio EO : PO : PGE = 98 : 1 : 1, weight-average molecular weight about 100,000 g/mol, molecular weight distribution about 2.0) was used, and as the polyether-based polyurethane resin (B), a polymer of bifunctional polyol and hexamethylene diisocyanate ("Pulset HA" manufactured by Meisei Chemical Works, Ltd., polymerization ratio [bifunctional polyol : hexamethylene diisocyanate] = 97.1 : 2.9) was used.

### <Manufacture of Slurry>

Into a stirrer of a tanmo paper machine was introduced 1500 L of distilled water, and 2.5 kg of carbon fibers (manufactured by Toho Tenax Co., Ltd.: trade name "HT C110", 9 µm fiber diameter, chopped fibers cut into 13 mm) and 2.5 kg of the polyetherimide fibers were added thereto in this order, and the mixture was stirred at 100 rpm to obtain a slurry. The amount of polyetherimide fibers was 100 parts by mass based on 100 parts by mass of the carbon fibers.

The time from the addition of the polyetherimide fibers was completed until the carbon fibers were uniformly dispersed was measured, and it was 20 minutes. Moreover, the uniformity of the carbon fibers in the slurry was visually evaluated, and the carbon fiber bundle was not observed as long as the slurry was visually confirmed.

### <Manufacture of Nonwoven Fabric>

The slurry was diluted with distilled water, and papermaking was carried out using a tanmo paper machine so that the basis weight was 60 g/m². The nonwoven fabric after papermaking was dried at 105°C for 4 hours using a hot air dryer to obtain a nonwoven fabric. The amount of dispersant in the nonwoven fabric was 0.09% by mass based on the total weight of polyetherimide fibers in the nonwoven fabric.

The number of carbon fiber bundles having a fiber bundle width of 0.1 mm or more on a surface of the nonwoven fabric was 160 pieces/m².

### <Manufacture of Carbon Fiber-Reinforced Composite Molded Body>

The nonwoven fabric was cut into a size of 30 cm × 15 cm, 27 sheets were laminated and pressed using a hot press (manufactured by GO-factory Co., Ltd.) at 340°C and 10 MPa for 5 minutes to obtain a carbon fiber-reinforced composite molded body.

The number of carbon fiber bundles having a fiber bundle width of 0.1 mm or more on a surface of the carbon fiber-reinforced composite molded body was 160 pieces/m². Further, the bending strength of the carbon fiber-reinforced composite molded body was 396 MPa, and the Charpy impact value was 38.0 KJ/m².

### <Example 2>

A thermoplastic resin fiber to which a dispersant was attached, a slurry, a nonwoven fabric and a carbon fiber-reinforced composite molded body were manufactured and evaluated by the same method as in Example 1, except that chopped fibers of polyamide PA9T (circular structure) with a single yarn fineness of 2.2 dtex cut into 5 mm of fiber length were used in place of the chopped fibers of polyetherimide as a thermoplastic resin fiber, and the press temperature was changed to 320°C in place of 340°C. The evaluation results are shown in Table 2 described later.

### <Example 3>

A thermoplastic resin fiber to which a dispersant was attached, a slurry, a nonwoven fabric and a carbon fiber-reinforced composite molded body were manufactured and evaluated by the same method as in Example 1, except that chopped fibers of polyamide Ny-6 (circular structure) with a single yarn fineness of 2.2 dtex cut into 5 mm of fiber length were used in place of the chopped fibers of polyetherimide as a thermoplastic resin fiber, and the press temperature was changed to 300°C in place of 340°C. The evaluation results are shown in Table 2 described later.

### <Example 4>

A thermoplastic resin fiber to which a dispersant was attached, a slurry, a nonwoven fabric and a carbon fiber-reinforced composite molded body were manufactured and evaluated by the same method as in Example 1, except that chopped fibers of polypropylene (circular structure) with a single yarn fineness of 2.2 dtex cut into 5 mm of fiber length were used in place of the chopped fibers of polyetherimide as a thermoplastic resin fiber, and the press temperature was changed to 270°C in place of 340°C. The evaluation results are shown in Table 2 described later.

### <Example 5>

A thermoplastic resin fiber to which a dispersant was attached, a slurry, a nonwoven fabric and a carbon fiber-reinforced composite molded body were manufactured and evaluated by the same method as in Example 1, except that only the random copolymer (A) was used as the dispersant in place of the random copolymer (A) and the polyether-based polyurethane resin (B). The evaluation results are shown in Table 2 described later.

### <Example 6>

A thermoplastic resin fiber to which a dispersant was attached, a slurry and a nonwoven fabric were manufactured and evaluated by the same method as in Example 1, except for changing the adhesion amount of the dispersant from 6.7% to 1.0%, and performing manufacturing of up to a nonwoven fabric without manufacturing a carbon fiber-reinforced composite molded body. The evaluation results are shown in Table 3 described later.

### <Example 7>

A thermoplastic resin fiber to which a dispersant was attached, a slurry and a nonwoven fabric were manufactured and evaluated by the same method as in Example 1, except for changing the adhesion amount of the dispersant from 6.7% to 0.5%, and performing manufacturing of up to a nonwoven fabric without manufacturing a carbon fiber-reinforced composite molded body. The evaluation results are shown in Table 3 described later.

### <Example 8>

A thermoplastic resin fiber to which a dispersant was attached, a slurry and a nonwoven fabric were manufactured and evaluated by the same method as in Example 1, except for changing the adhesion amount of the dispersant from 6.7% to 0.25%, and performing manufacturing of up to a nonwoven fabric without manufacturing a carbon fiber-reinforced composite molded body. The evaluation results are shown in Table 3 described later.

### <Example 9>

A thermoplastic resin fiber to which a dispersant was attached, a slurry and a nonwoven fabric were manufactured and evaluated by the same method as in Example 1, except for changing the adhesion amount of the dispersant from 6.7% to 0.2%, and performing manufacturing of up to a nonwoven fabric without manufacturing a carbon fiber-reinforced composite molded body. The evaluation results are shown in Table 3 described later.

### <Example 10>

A thermoplastic resin fiber to which a dispersant was attached, a slurry and a nonwoven fabric were manufactured and evaluated by the same method as in Example 1, except for changing the adhesion amount of the dispersant from 6.7% to 0.15%, and performing manufacturing of up to a nonwoven fabric without manufacturing a carbon fiber-reinforced composite molded body. The evaluation results are shown in Table 3 described later.

### <Comparative Example 1>

Into a stirrer of a tanmo paper machine was introduced 1500 L of distilled water, and 2.5 kg of the carbon fibers used in Example 1 and 2.5 kg of the polyetherimide fibers before attaching the dispersant which were used in Example 1 were added thereto in this order, and the mixture was stirred at 100 rpm.

Dispersibility of the carbon fibers was poor, and carbon fiber bundles were remarkably observed.

A nonwoven fabric and a carbon fiber-reinforced composite molded body were manufactured and evaluated by the same method as in Example 1 using the resulting mixture.

The evaluation results are shown in Tables 1 and 2 described later.

### <Comparative Example 2>

Into a stirrer of a tanmo paper machine was introduced 1500 L of distilled water, and 2.5 kg of the carbon fibers used in Example 1 and 2.5 kg of the polyetherimide fibers before attaching the dispersant which were used in Example 1 were added thereto in this order, then 0.025 kg of the random copolymer (A) was added, and the mixture was stirred at 100 rpm. The type and amount of the random copolymer (A) added were the same as the type and amount as in Example 1.

In the resulting mixture, the carbon fibers were not sufficiently dispersed in 20 minutes (time in which the carbon fibers were uniformly dispersed in Examples 1 to 5 of the present invention) from the completion of addition of the random copolymer (A), and a carbon fiber bundle was observed.

A nonwoven fabric and a carbon fiber-reinforced composite molded body were manufactured and evaluated by the same method as in Example 1 using the resulting mixture.

The evaluation results are shown in Tables 1 and 2 described later.

### <Comparative Example 3>

Into a slash pulper (model: SVP-250-B, manufactured by Kyowa Iron Works Inc.) was introduced 2.5 kg of chopped fibers of polyetherimide (circular structure) with a single yarn fineness of 2.2 dtex cut into 5 mm of fiber length, 5 L of an aqueous solution of a polyether-based polyurethane resin (B) prepared to 2.5% by mass was added thereto, and the mixture was stirred at 200 rpm for 10 minutes. Thereafter, a dispersant was attached to a surface of the polyetherimide fibers by drying at 105°C for 10 hours using a hot air dryer. The amount of dispersant (B) attached to the polyetherimide fibers was 6.7% by mass based on the total weight of the polyetherimide fibers to which a dispersant was not attached.

As the polyether-based polyurethane resin (B), a polymer of bifunctional polyol and hexamethylene diisocyanate ("Pulset HA" manufactured by Meisei Chemical Works, Ltd., polymerization ratio [bifunctional polyol: hexamethylene diisocyanate] = 97.1 : 2.9) was used.

Subsequently, a slurry, a nonwoven fabric and a carbon fiber-reinforced composite molded body were manufactured and evaluated by the same method as in Example 1, except that a polyetherimide fiber to which only the polyether-based polyurethane resin (B) was attached was used. The evaluation results are shown in Table 2 described later.

### <Comparative Example 4>

A slurry, a nonwoven fabric and a carbon fiber-reinforced composite molded body were manufactured and evaluated by the same method as in Comparative Example 1, except that the PA9T fibers before attaching the dispersant which were used in Example 2 were used in place of the polyetherimide fibers used in Comparative Example 1 as a thermoplastic resin fiber, and the press temperature was changed to 320°C in place of 340°C. The evaluation results are shown in Table 2 described later.

### <Comparative Example 5>

A slurry, a nonwoven fabric and a carbon fiber-reinforced composite molded body were manufactured and evaluated by the same method as in Comparative Example 1, except that the Ny-6 fibers before attaching the dispersant which were used in Example 3 were used in place of the polyetherimide fibers used in Comparative Example 1 as a thermoplastic resin fiber, and the press temperature was changed to 300°C in place of 340°C. The evaluation results are shown in Table 2 described later.

### <Comparative Example 6>

A slurry, a nonwoven fabric and a carbon fiber-reinforced composite molded body were manufactured and evaluated by the same method as in Comparative Example 1, except that the polypropylene fibers before attaching the dispersant which were used in Example 4 were used in place of the polyetherimide fibers used in Comparative Example 1 as a thermoplastic resin fiber, and the press temperature was changed to 270°C in place of 340°C. The evaluation results are shown in Table 2 described later.

### [Table 1]

**Table 1: Dispersibility of carbon fibers**

| | Thermoplastic resin fibers | Reinforcing fibers | Dispersant | Dispersibility of carbon fibers | Dispersion time (min) |
|---|---|---|---|---|---|
| Example 1 | PEI | Carbon fibers | A+B (Attached to PEI fibers) | A | 20 |
| Comparative Example 1 | PEI | Carbon fibers | None | C | Not dispersed |
| Comparative Example 2 | PEI | Carbon fibers | A (Added afterward separately from PEI fibers) | B | 20 |

### [Table 2]

**Table 2: Evaluation results of carbon fiber-reinforced composite molded bodies**

| | Thermoplastic resin fibers | Dispersant | Attached amount of dispersant (% by mass) | Dispersion time (min) | Amount of dispersant in nonwoven fabric (% by mass) | Number of carbon fiber bundles in nonwoven fabric (pieces/m²) | Press temperature (°C) | Number of carbon fiber bundles in molded body (pieces/m²) | Bending strength (MPa) | Charpy impact value (kJ/m²) |
|---|---|---|---|---|---|---|---|---|---|---|
| Example 1 | PEI | A+B¹⁾ | 6.7 | 20 | 0.09 | 160 | 340 | 160 | 396 | 38.0 |
| Example 2 | PA9T | A+B¹⁾ | 6.9 | 20 | 0.08 | 144 | 320 | 144 | 216 | 27.2 |
| Example 3 | Ny-6 | A+B¹⁾ | 6.5 | 20 | 0.08 | 144 | 300 | 144 | 198 | 24.4 |
| Example 4 | PP | A+B¹⁾ | 6.3 | 20 | 0.07 | 176 | 270 | 176 | 157 | 21.2 |
| Example 5 | PEI | A¹⁾ | 6.4 | 20 | 0.08 | 1600 | 340 | 1600 | 378 | 30.4 |
| Comparative Example 1 | PEI | None | - | 20 | - | 6200 | 340 | 6200 | 351 | 24.8 |
| Comparative Example 2 | PEI | A²⁾ | - | 20 | 0.07 | 3700 | 340 | 3700 | 356 | 26.8 |
| Comparative Example 3 | PEI | B¹⁾ | 6.7 | 20 | 0.06 | 3400 | 340 | 3400 | 362 | 27.7 |
| Comparative Example 4 | PA9T | None | - | 20 | - | 6500 | 320 | 6500 | 186 | 19.3 |
| Comparative Example 5 | Ny-6 | None | - | 20 | - | 5900 | 300 | 5900 | 174 | 16.6 |
| Comparative Example 6 | PP | None | - | 20 | - | 6000 | 270 | 6000 | 137 | 16.9 |

| | | | | | | | | | | |
|---|---|---|---|---|---|---|---|---|---|---|
| 1) Thermoplastic resin fibers to which a dispersant was attached was used. 2) A dispersant was added afterward separately from thermoplastic resin fibers. | | | | | | | | | | |

### [Table 3]

**Table 3: Effects of dispersant amount on carbon fiber dispersibility**

| | Thermoplastic resin fibers | Dispersant | Attached amount of dispersant (% by mass) | Dispersion time (min) | Number of carbon fiber bundles in nonwoven fabric (pieces/m²) |
|---|---|---|---|---|---|
| Example 1 | PEI | A+B¹⁾ | 6.7 | 20 | 160 |
| Example 6 | PEI | A+B¹⁾ | 1.0 | 20 | 144 |
| Example 7 | PEI | A+B¹⁾ | 0.5 | 20 | 160 |
| Example 8 | PEI | A+B¹⁾ | 0.25 | 20 | 496 |
| Example 9 | PEI | A+B¹⁾ | 0.2 | 20 | 576 |
| Example 10 | PEI | A+B¹⁾ | 0.15 | 20 | 1136 |
| Comparative Example 1 | PEI | None | 0 | 20 | 6200 |

| | | | | | |
|---|---|---|---|---|---|
| 1) Thermoplastic resin fibers to which a dispersant was attached was used. | | | | | |

As shown in Table 1, when the thermoplastic resin fiber of the present invention to which a dispersant was attached was used (Example 1), the carbon fibers were effectively uniformly dispersed, and no carbon fiber bundle was observed. This good dispersion was achieved in a short time and with weak agitation. This means that the thermoplastic resin fiber of the present invention effectively acted as a dispersant for carbon fibers, and the carbon fibers were very uniformly dispersed in the aqueous dispersion medium.

On the other hand, when the thermoplastic resin fiber to which a dispersant was not attached was used (Comparative Example 1), the carbon fibers were not dispersed.

In addition, when the dispersant (A) was added separately from the thermoplastic resin fiber (Comparative Example 2), the carbon fibers were not effectively uniformly dispersed in a short time and with weak agitation.

As shown in Table 2, when the thermoplastic resin fiber of the present invention to which a dispersant was attached was used (Examples 1 to 5), the number of carbon fiber bundles in the nonwoven fabric and in the molded body was extremely small, and higher bending strength and Charpy impact value of the molded body were obtained, without depending on the type of the thermoplastic resin fiber. This means that the thermoplastic resin fiber of the present invention effectively acted as a dispersant for carbon fibers, and the carbon fibers were uniformly dispersed, resulting in improved mechanical properties of the molded body.

On the other hand, when the thermoplastic resin fiber to which a dispersant was not attached was used and a dispersant was not used (Comparative Example 1 and Comparative Examples 4 to 6), the carbon fibers were not dispersed, and as a result, the numbers of carbon fiber bundles in the nonwoven fabric and in the molded body were extremely large, and only extremely low bending strength and Charpy impact value of the molded body were obtained.

Moreover, when the thermoplastic resin fiber to which a dispersant was not attached was used and the dispersant (A) was later added separately from the thermoplastic resin fiber (Comparative Example 2), and when the thermoplastic resin fiber to which only the dispersant (B) was attached was used (Comparative Example 3), the carbon fibers were not sufficiently dispersed, and as a result, the numbers of carbon fiber bundles in the nonwoven fabric and in the molded body were large, and only lower bending strength and Charpy impact value of the molded body were obtained.

As shown in Table 3, even when the adhesion amount of the dispersant of the thermoplastic resin fiber was changed, dispersion of the carbon fibers was good, and the number of carbon fiber bundles in the obtained nonwoven fabric was small.

### INDUSTRIAL APPLICABILITY

Since the thermoplastic resin fibers of the present invention can effectively disperse carbon fibers, it is used as an excellent dispersant of carbon fibers.

The thermoplastic resin fibers of the present invention is used as an excellent dispersant of carbon fibers in a slurry containing the thermoplastic resin fibers of the present invention, carbon fibers and water, and the carbon fibers are well dispersed in the slurry in a short time and with weak agitation. Therefore, it has economic advantages for the manufacture of the slurry.

A carbon fiber-reinforced composite molded body manufactured from a nonwoven fabric based on the thermoplastic resin fibers of the present invention and carbon fibers has improved mechanical properties due to the well dispersed carbon fibers. In the carbon fiber-reinforced composite molded body, the thermoplastic resin fiber of the present invention acts as a matrix resin, so that the thermoplastic resin fiber of the present invention is used as a matrix resin precursor in the slurry and the nonwoven fabric. Since the carbon fiber-reinforced composite molded body of the present invention has improved mechanical properties, it can be extremely suitably used, but is not particularly limited, in many applications, such as in general industrial material fields, electric and electronic fields, civil engineering and construction fields, aircraft, automotive, rail and marine fields, agricultural material fields, optical material fields, and medical material fields.

## Claims

1. A thermoplastic resin fiber to which a dispersant containing a random copolymer (A) of glycidyl ether and an alkylene oxide is attached in an amount of 0.1 to 20% by mass based on a total mass of thermoplastic resin fibers to which a dispersant is not attached.

2. The thermoplastic resin fiber according to claim 1, wherein the random copolymer (A) of glycidyl ether and an alkylene oxide is a random copolymer of phenyl glycidyl ether and an alkylene oxide.

3. The thermoplastic resin fiber according to claim 2, wherein the random copolymer (A) of phenyl glycidyl ether and an alkylene oxide is a random copolymer of phenyl glycidyl ether and ethylene oxide, or a random copolymer of phenyl glycidyl ether, ethylene oxide and propylene oxide.

4. The thermoplastic resin fiber according to any one of claims 1 to 3, wherein the dispersant further contains a polyether-based polyurethane resin (B).

5. The thermoplastic resin fiber according to any one of claims 1 to 4, wherein the thermoplastic resin fiber is one or more fibers selected from the group consisting of polyetherimide fibers, polyamide fibers, polyester fibers, polyolefin fibers, polyetheretherketone fibers and polycarbonate fibers.

6. The thermoplastic resin fiber according to any one of claims 1 to 5, wherein the thermoplastic resin fiber has one or more structures selected from the group consisting of a circular structure, an elliptical structure, a triangular structure, a cross structure, a core-sheath structure, a sea-island structure, a multi-pleat structure, a hollow structure and a side-by-side structure.

7. The thermoplastic resin fiber according to any one of claims 1 to 6, wherein the dispersant is attached in an amount of 0.5 to 10% by mass based on the total mass of the thermoplastic resin fibers to which a dispersant is not attached.

8. Use of the thermoplastic resin fiber according to any one of claims 1 to 7 as a dispersant for carbon fibers in a slurry containing the thermoplastic resin fibers, the carbon fibers and water.

9. A slurry comprising the thermoplastic resin fibers according to any one of claims 1 to 7, carbon fibers and water.

10. The slurry according to claim 9, comprising 40 to 900 parts by mass of the thermoplastic resin fibers based on 100 parts by mass of the carbon fibers.

11. A nonwoven fabric obtained by papermaking and drying the slurry according to claim 9 or 10.

12. A nonwoven fabric based on the thermoplastic resin fibers according to any one of claims 1 to 7 and carbon fibers, wherein an amount of the dispersant in the nonwoven fabric is 0.01 to 1.0% by mass based on a total mass of thermoplastic resin fibers in the nonwoven fabric.

13. The nonwoven fabric according to claim 11 or 12, wherein a number of carbon fiber bundles having a fiber bundle width of 0.1 mm or more on a surface is 2000 pieces/m² or less.

14. A carbon fiber-reinforced composite molded body based on the nonwoven fabric according to any one of claims 11 to 13.

15. The carbon fiber-reinforced composite molded body according to claim 14, wherein a number of carbon fiber bundles having a fiber bundle width of 0.1 mm or more on a surface is 2000 pieces/m² or less.

16. The carbon fiber-reinforced composite molded body according to claim 14 or 15, wherein the thermoplastic resin fiber acts as a matrix resin.

17. A method for manufacturing a carbon fiber-reinforced composite molded body, the method comprising:
papermaking and drying the slurry according to claim 9 or 10, and
heat press molding the obtained nonwoven fabric.
